# FASCICULE DE BREVET EUROPEEN

(11) **EP 3 012 892 B1**
(45) Date de publication et mention de la délivrance du brevet: **19.07.2017**
(21) Numéro de dépôt: 14190301.3
(22) Date de dépôt: 24.10.2014
(51) Int. Cl.: H01M 8/2465, H01M 8/0273, H01M 8/0297, C25B 9/20, C25B 15/08

(54) **Dispositif électrochimique à empilement**
Elektrochemische Anordnung zum Stapeln
Electrochemical device with stack

(43) Date de publication de la demande: 27.04.2016
(73) Titulaire: Swiss Hydrogen SA, 1700 Fribourg (CH)
(72) Inventeur: Gashi, Rexhep, 1762 Givisiez (CH); Shapiro, Daniel, 1723 Marly (CH); Varkaraki, Elli, 2502 Bienne (CH)
(74) Mandataire: Micheli & Cie SA

(56) Documents cités:
- US-A1- 2003 031 915
- US-A1- 2008 280 178
- US-A1- 2012 258 378
- US-B1- 6 180 274

## Description

### Domaine de l'invention

L'invention se rapporte à un dispositif électrochimique destiné à la production de produits par réaction électrochimique de réactants, ledit dispositif électrochimique comprenant un empilement de cellules électrochimiques, chaque cellule comprenant un châssis, deux plaques bipolaires partagées avec des cellules adjacentes, un assemblage membrane/électrodes et deux éléments intercalaires agencés pour transporter un courant ainsi que les réactants/produits de/vers l'assemblage membrane/électrodes.

### Arrière-plan de l'invention

De tels dispositifs sont connus de l'homme du métier et sont généralement utilisés comme électrolyseur pour produire de l'oxygène et de l'hydrogène à partir d'eau et d'électricité ou comme pile à combustible pour produire de l'eau et de l'électricité à partir d'oxygène et d'hydrogène. Parmi ces dispositifs, on peut notamment citer les dispositifs à membrane échangeuse d'ions du type AEM (Alkaline exchange membrane) et du type PEM (Proton exchange membrane ou Polymer Electrolyte Membrane). Ces dispositifs utilisent une pluralité de cellules électrochimiques en série, empilées entre deux plaques d'extrémité, suivant l'axe longitudinal du dispositif, de manière à former un empilement appelé « stack ». De tels dispositifs sont décrits par exemple dans la publication WO 2011/114094 ou US 2013/0122388. Dans ces dispositifs, le châssis d'une cellule électrochimique comprend un cadre réalisé en au moins deux parties, entre lesquelles la membrane est maintenue par pincement de sa zone périphérique. Une pression est appliquée selon l'axe longitudinal du dispositif afin de garantir un bon contact entre les différents éléments des cellules. La pression axiale est généralement appliquée en contraignant plus ou moins les plaques d'extrémité qui sont reliées par des tiges axiales montées autour des cellules. En conséquence, une contrainte importante est appliquée notamment au niveau de la zone périphérique de la membrane, ce qui peut entrainer sa fragilisation.
De plus, les dispositifs comprennent également d'autres éléments de support, notamment des supports pour les électrodes tels que décrits dans la demande US 2013/0122388, de sorte que les dispositifs connus comprennent un très grand nombre de pièces, difficiles à fabriquer, rendant onéreuse leur construction. En outre, le nombre important de pièces rend difficile le contrôle de l'étanchéité entre les différents réactants et produits, alors que l'on souhaite bien évidemment éviter le mélange d'hydrogène et d'oxygène. Le document US 2013/0122388 décrit notamment l'utilisation d'un joint d'étanchéité plat prévu à la périphérie de la cellule, entre le cadre et une plaque bipolaire, rendant difficile l'application d'une pression uniforme et la régularité de la distance entre chaque cellule. Le document US 2008/0280178 décrit une pile à combustible dont l'assemblage comporte des cadres présentant chacun un épaulement périphérique intérieur, et dans laquelle des joints toriques assurent l'étanchéité au niveau des orifices nécessaires à l'amenée des réactants et à l'évacuation des produits.

### Résumé de l'invention

L'invention a notamment pour objectif de pallier les différents inconvénients de ces techniques connues.

Plus précisément, un objectif de l'invention est de fournir un dispositif électrochimique permettant de préserver la membrane.

L'invention a également pour objectif de fournir un dispositif électrochimique permettant la répétabilité de la pression appliquée sur la membrane ainsi que la répétabilité de la distance entre chaque cellule.

L'invention a également pour objectif de fournir un dispositif électrochimique permettant de garantir l'étanchéité, et de minimiser les conséquences si toutefois l'étanchéité n'est pas maintenue.

L'invention a également pour objectif de fournir un dispositif électrochimique simple et économique à fabriquer, dans lequel les pièces peuvent être produites en masse et assemblées au moins de manière semi-automatique.

A cet effet, la présente invention concerne un dispositif électrochimique destiné à la production de produits par réaction électrochimique de réactants, ledit dispositif électrochimique comprenant un empilement de cellules électrochimiques, chaque cellule comprenant un châssis, deux plaques bipolaires partagées avec des cellules adjacentes, un assemblage membrane/électrodes, et deux éléments intercalaires transporteurs de courant et de réactants/produits.

Selon l'invention, ledit châssis de la cellule comprend un seul cadre réalisé d'une seule pièce, ledit cadre présentant des faces supérieure et inférieure agencées respectivement pour réaliser un contact plan avec les plaques bipolaires disposées de part et d'autre dudit cadre, et une ouverture centrale agencée pour recevoir l'assemblage membrane/électrodes et les deux éléments intercalaires, ledit cadre comprenant tous les orifices nécessaires à l'amenée des réactants et à l'évacuation des produits, et des logements agencés pour recevoir des moyens d'étanchéité assurant l'étanchéité de chaque réactant et produit.

D'une manière avantageuse, l'ouverture du cadre peut comprendre un épaulement périphérique intérieur sur lequel repose une zone périphérique de l'assemblage membrane/électrodes, définissant un premier espace dans lequel se loge un élément intercalaire et un deuxième espace dans lequel se loge l'autre élément intercalaire, lesdits premier et deuxième espaces étant fermés respectivement par l'une des plaques bipolaires.

De préférence, ledit épaulement peut comprendre une première gorge périphérique agencée pour recevoir des moyens d'étanchéité.

D'une manière avantageuse, les faces supérieure et inférieure du cadre peuvent comprendre respectivement, autour de l'ouverture, une deuxième gorge périphérique agencée pour recevoir des moyens d'étanchéité, et positionnée de sorte que les orifices d'amenée et d'évacuation relatifs aux réactants et aux produits présents d'un même côté de l'assemblage membrane/électrodes sont disposés à l'intérieur de la deuxième gorge périphérique et les orifices correspondant aux orifices d'amenée et d'évacuation relatifs aux réactants et aux produits présents de l'autre côté de l'assemblage membrane/électrodes sont disposés à l'extérieur de ladite deuxième gorge périphérique, ainsi qu'une troisième et une quatrième gorges périphériques agencées autour des orifices correspondant aux orifices d'amenée et d'évacuation relatifs aux réactants et aux produits présents de l'autre côté de l'assemblage membrane/électrodes, lesdites troisième et quatrième gorges étant agencées pour recevoir des moyens d'étanchéité.

De préférence, les faces supérieure et inférieure du cadre peuvent comprendre respectivement une première creusure agencée pour mettre en, communication fluidique l'orifice d'amenée du réactant avec l'élément intercalaire associé et une deuxième creusure agencée pour mettre en communication fluidique ledit élément intercalaire avec l'orifice d'évacuation du produit.

Avantageusement, chaque plaque bipolaire peut .être une plaque métallique lisse comportant des orifices d'amenée des réactants et des orifices d'évacuation des produits en correspondance avec ceux du cadre.

Ainsi, le dispositif électrochimique de l'invention comprend des cellules comprenant peu d'éléments, ces éléments, notamment le cadre et les plaques bipolaires, étant faciles et économiques à réaliser et à assembler, tout en préservant d'une manière simple l'étanchéité du système.

### Description sommaire des dessins

D'autres caractéristiques et avantagés de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue éclatée d'un dispositif électrochimique conforme à l'invention ;
- la figure 2 est une vue éclatée d'une cellule électrochimique utilisée dans le dispositif électrochimique de l'invention ;
- la figure 3 est une vue en perspective de la face supérieure du cadre utilisé dans le dispositif électrochimique de l'invention;
- la figure 4 est une vue en perspective de la face inférieure du cadre utilisé dans le dispositif électrochimique de l'invention ;
- la figure 5 est une vue de dessus de la face inférieure du cadre utilisé dans le dispositif électrochimique de l'invention ;
- la figure 6 est une vue en coupe selon la ligne A-A de la figure 5 ;
- la figure 7 est une vue en coupe selon la ligne B-B de la figure 5 ; et
- la figure 8 est une vue en coupe selon la ligne C-C de la figure 5.

### Description détaillée des modes de réalisation préférés

Dans la présente description, le terme « dispositif électrochimique » comprend notamment les électrolyseurs et les piles à combustible, mais s'applique également à des dispositifs permettant de mettre en oeuvre d'autres types de procédés électrochimiques, tels que le procédé « chlore-soude ». La présente invention peut être appliquée de manière similaire à ces dispositifs.

Un tel dispositif électrochimique est destiné à la production de produits par réaction électrochimique de réactants, les réactants étant l'hydrogène et l'oxygène et le produit étant de l'eau dans le cas des piles à combustible et le réactant étant de l'eau et les produits étant l'hydrogène et l'oxygène dans le cas des électrolyseurs.

La description qui suit est celle d'un électrolyseur mais peut être adaptée par l'homme du métier à une pile à combustible ou à d'autres dispositifs mettant en oeuvre des procédés électrochimiques similaires.

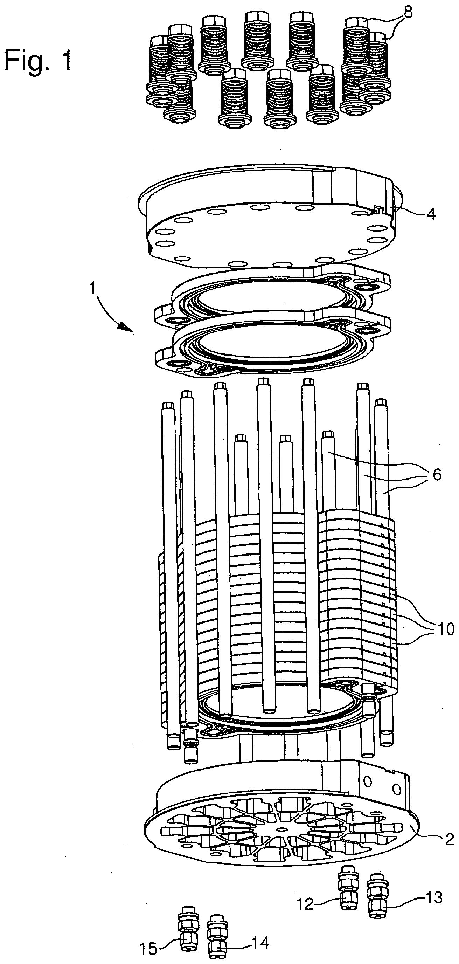

En référence à la figure 1, le dispositif électrochimique 1 comprend de manière connue deux plaques d'extrémités 2 et 4 reliées par un ensemble de tiges axiales 6 respectivement pourvues d'écrous associés à des rondelles Belleville 8 par exemple. Lesdites tiges axiales et leurs écrous permettent d'appliquer sur le dispositif 1 la pression nécessaire. Une pluralité de cellules électrochimiques 10 est maintenue entre les tiges axiales 6, lesdites cellules 10 étant empilées les unes sur les autres axialement de manière à former un « stack ». La plaque d'extrémité 2 comporte des raccords ou tubes 12, 13 pour l'amenée des réactants et des raccords ou tubes 14, 15 pour l'évacuation des produits.

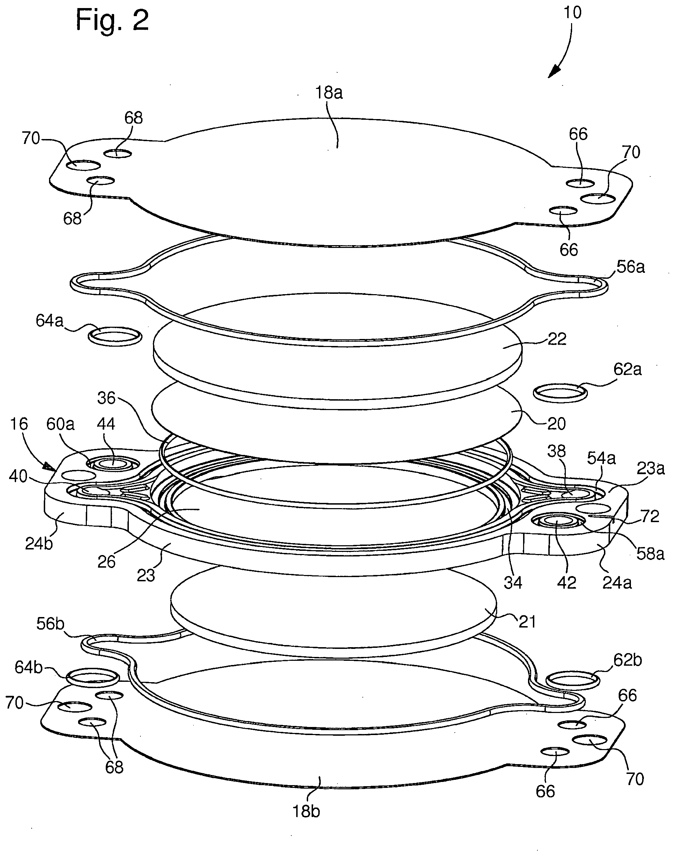

En référence à la figure 2, une cellule électrochimique 10 comprend un châssis 16, deux plaques bipolaires 18a, 18b disposées de part et d'autre du châssis 16, chaque plaque bipolaire 18a, 18b étant commune à la cellule électrochimique adjacente. La cellule 10 comprend également un assemblage membrane/électrodes 20 et deux éléments intercalaires 21, 22, agencés d'une part pour transporter un courant et d'autre part pour transporter les réactants/produits de/vers l'assemblage membrane/électrodes 20. L'assemblage membrane/électrodes 20, comprenant la membrane échangeuse d'ions et les deux électrodes formées par des minces couches de pâte métallique collées sur la membrane, est connu de l'homme du métier et ne nécessite pas ici de description détaillée.

Selon l'invention, le châssis 16 de la cellule 10 est constitué d'un seul et unique cadre 23, réalisé d'une seule pièce. Dans la forme de réalisation représentée, le cadre 23 est de préférence de forme annulaire, mais il est bien évident que toute autre forme appropriée est possible. Le cadre 23 est muni de deux pattes extérieures rectangulaires 24a, 24b, diamétralement opposées, dont le rôle sera expliqué ci-après. Le cadre 23 présente une face supérieure 23a et une face inférieure 23b (la cellule étant vue dans la direction axiale) qui sont substantiellement planes, agencées respectivement pour réaliser un contact plan avec la plaque bipolaire 18a, 18b associée, disposée contre la face supérieure 23a, respectivement inférieure 23b, dudit cadre 23.

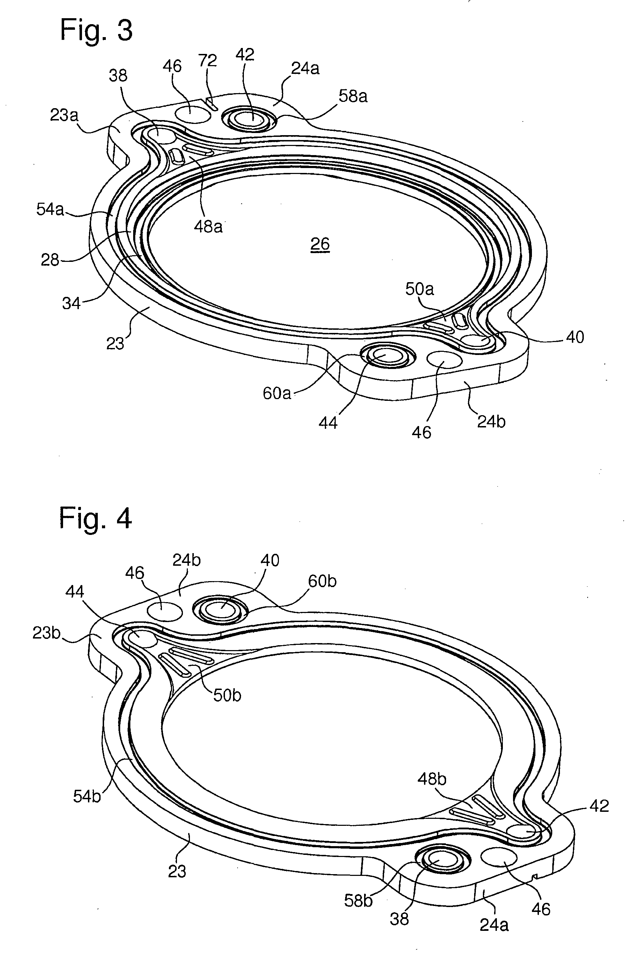

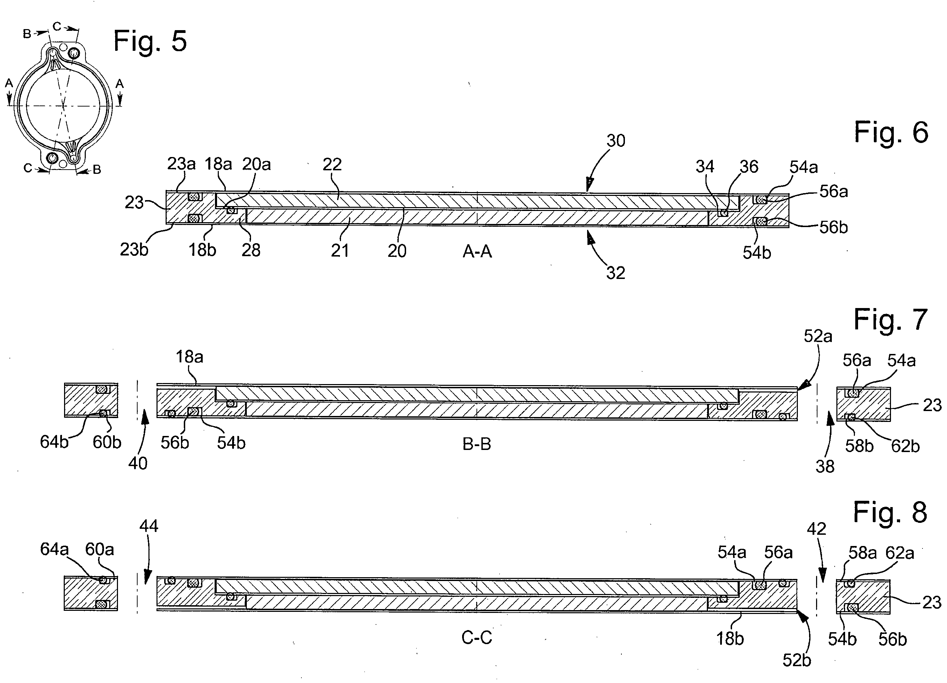

En référence aux figures 3 à 8, le cadre 23 comporte une ouverture centrale 26 à l'intérieur de laquelle se loge entièrement l'assemblage membrane/électrodes 20 ainsi que les éléments intercalaires 21 et 22. Comme le montre plus précisément la figure 6, l'ouverture 26 du cadre 23 comprend un épaulement périphérique intérieur 28, sensiblement plan, sur lequel repose une zone périphérique extérieure 20a de l'assemblage membrane/électrodes 20, de manière à définir un premier espace supérieur 30 dans lequel se loge l'un des éléments intercalaires 22, et plus précisément ici l'élément intercalaire cathodique, et un deuxième espace inférieur 32 dans lequel se loge l'autre élément intercalaire 21, et plus précisément ici l'élément intercalaire anodique. L'élément intercalaire 22 occupant l'espace supérieur 30 présente des dimensions (ici un diamètre), supérieures à celles de l'élément intercalaire 21 occupant l'espace inférieur 32. La zone périphérique extérieure 20a de l'assemblage membrane/électrodes 20 reposant sur l'épaulement 28 est une surface non active, ne produisant pas de gaz, ce qui permet de créer un chemin périphérique libre favorisant l'évacuation du produit formé au niveau dudit élément intercalaire 22, ici l'hydrogène.

L'épaulement 28 comprend une première gorge périphérique 34 agencée pour recevoir des moyens d'étanchéité 36, tels qu'un joint torique, permettant d'assurer l'étanchéité de part et d'autre de l'assemblage membrane/électrodes 20.

Lesdits premier et deuxième espaces 30, 32 sont fermés respectivement par l'une des plaques bipolaires 18a, 18b, leur périphérie venant au contact de la face supérieure 23a et inférieure 23b respectivement du cadre 23 et leur zone intérieure venant au contact de l'élément intercalaire cathodique 22 et de l'élément intercalaire anodique 21 respectivement.

D'une manière particulièrement avantageuse, les éléments intercalaires 21 et 22 sont réalisés dans un matériau permettant d'assurer trois fonctions : le transport du courant, le transport des réactants/produits, depuis et vers l'assemblage membrane/électrodes 20, ainsi qu'une fonction d'appui sur l'assemblage membrane/électrodes 20. Plus spécifiquement, l'un des éléments intercalaires, ici l'élément intercalaire cathodique 22 appuie l'assemblage membrane/électrodes 20 contre le joint torique 36, de manière à maintenir l'étanchéité de chaque côté de l'assemblage membrane/électrodes 20. Ainsi, les éléments intercalaires 21 et 22 sont réalisés en un matériau conducteur, présentant une souplesse et une porosité adéquates, permettant d'avoir des éléments intercalaires constituant à la fois des collecteurs/distributeurs de courant, des plaques d'écoulement et les tampons presseurs. On peut utiliser notamment des grilles en titane, acier, ou autres métaux recouverts de couches protectrices ou non, dont la structure forme des canaux de guidage pour guider les réactants et les produits vers/depuis l'assemblage membrane/électrodes. On peut utiliser notamment une structure en treillis.

Les différents éléments sont choisis de sorte que la hauteur de l'assemblage membrane/électrodes et des éléments intercalaires 21 et 22 est légèrement supérieure à l'épaisseur du cadre 23 avant le montage, de sorte que l'assemblage membrane/électrodes et les éléments intercalaires puissent être correctement comprimés et entièrement intégrés dans le cadre de la cellule lorsque le dispositif électrochimique est assemblé.

De plus, le cadre 23 comprend tous les orifices nécessaires à l'amenée des réactants et à l'évacuation des produits, ainsi que des logements agencés pour recevoir des moyens d'étanchéité assurant l'étanchéité de chaque réactant et produit. Ces moyens d'étanchéité sont avantageusement des joints toriques standard.

Plus précisément en référence aux figures 3 et 4, le cadre 23 comprend (la cellule étant vue du côté cathodique, soit du côté de la production d'hydrogène dans la configuration « électrolyseur »), prévu sur la première patte 24a, un orifice 38 d'amenée d'eau du côté cathodique et prévu sur la deuxième patte 24b, un orifice 40 d'évacuation de l'hydrogène du côté cathodique, diamétralement opposé à l'orifice 38 d'amenée d'eau du côté cathodique. Le cadre 23 comprend également, prévu sur la première patte 24a, un orifice 42 correspondant à l'orifice d'amenée d'eau du côté anodique et, prévu sur la deuxième patte 24b, un orifice 44 correspondant à l'orifice d'évacuation de l'oxygène du côté anodique, diamétralement opposé à l'orifice 42 d'amenée d'eau du côté anodique. Avantageusement, les orifices traversants 38, 40, 42 et 44 d'amenée des réactants et d'évacuation des produits sont disposés perpendiculairement aux faces supérieure 23a et inférieure 23b du cadre 23. Le cadre 23 comprend également, centré sur chaque patte 24a, 24b, un orifice 46 pour recevoir une tige axiale 6.

En référence à la figure 3, la face supérieure 23a du cadre 23 comprend une première creusure 48a agencée pour mettre en communication fluidique l'orifice 38 d'amenée du réactant (ici l'eau) avec le volume cathodique de la cellule, et notamment l'élément intercalaire 22 et une deuxième creusure 50a agencée pour mettre en communication fluidique le volume cathodique de la cellule, et notamment ledit élément intercalaire 22 avec l'orifice 40 d'évacuation du produit (ici l'hydrogène). De même, en référence à la figure 4, la face inférieure 23b du cadre 23 comprend une première creusure 48b agencée pour mettre en communication fluidique l'orifice 42 d'amenée du réactant (ici l'eau) avec le volume anodique de la cellule, et notamment l'élément intercalaire 21 et une deuxième creusure 50b agencée pour mettre en communication fluidique le volume anodique de la cellule, et notamment ledit élément intercalaire 21 avec l'orifice 44 d'évacuation du produit (ici l'oxygène). Comme le montrent les figures 7 et 8, l'épaisseur moindre du cadre 23 au niveau des creusures permet de former un passage 52a, 52b entre le cadre 23 et la plaque bipolaire 18a, 18b pour permettre l'amenée du réactant ou l'évacuation du produit vers ou de l'élément intercalaire et l'assemblage membrane/électrodes. Les creusures 48 et 50 présentent une forme évasée se rétrécissant en direction de l'orifice d'amenée ou d'évacuation associé, de manière à améliorer l'orientation du flux.

En référence aux figures 3 et 6 à 8, la face supérieure 23a du cadre 23 comprend, autour de l'ouverture centrale 26, une deuxième gorge périphérique 54a agencée pour recevoir des moyens d'étanchéité 56a, tels qu'un joint torique. La deuxième gorge périphérique 54a est positionnée de sorte que l'orifice 38 d'amenée du réactant (ici l'eau) du côté de l'élément intercalaire cathodique 22 et l'orifice 40 d'évacuation du produit (ici l'hydrogène) du côté dudit l'élément intercalaire cathodique 22 sont disposés à l'intérieur de la deuxième gorge périphérique 54a et de sorte que les orifices 42 et 44 correspondant aux orifices d'amenée et d'évacuation relatifs au réactant et au produit (ici l'oxygène) du côté de l'élément intercalaire anodique 21 présents de l'autre côté de l'assemblage membrane/électrodes 20 sont disposés à l'extérieur de ladite deuxième gorge périphérique 54a. La face supérieure 23a du cadre 23 comprend également une troisième gorge périphérique 58a agencée autour de l'orifice 42 correspondant à l'orifice d'amenée du réactant du côté de l'élément intercalaire anodique 21 et une quatrième gorge périphérique 60a agencée autour de l'orifice 44 correspondant à l'orifice d'évacuation du produit (ici l'oxygène) du côté dudit élément intercalaire anodique 21. Les troisième et quatrième gorges périphériques 58a et 60a sont agencées pour recevoir des moyens d'étanchéité 62a, 64a respectivement, tels qu'un joint torique.

De la même manière, en référence aux figures 4 et 6 à 8, la face inférieure 23b du cadre 23 comprend, autour de l'ouverture centrale 26, une deuxième gorge périphérique 54b agencée pour recevoir des moyens d'étanchéité 56b, tels qu'un joint torique. La deuxième gorge périphérique 54b est positionnée de sorte que l'orifice 42 d'amenée du réactant (ici l'eau) du côté de l'élément intercalaire anodique 21 et l'orifice 44 d'évacuation du produit (ici l'oxygène) du côté dudit élément intercalaire anodique 21 sont disposés à l'intérieur de la deuxième gorge périphérique 54b et de sorte que les orifices 38 et 40 correspondant aux orifices d'amenée et d'évacuation relatifs au réactant et au produit du côté de l'élément intercalaire cathodique 22 (ici l'hydrogène) présents de l'autre côté de l'assemblage membrane/électrodes 20 sont disposés à l'extérieur de ladite deuxième gorge périphérique 54b. La face inférieure 23b du cadre 23 comprend également une troisième gorge périphérique 58b agencée autour de l'orifice 38 correspondant à l'orifice d'amenée du réactant du côté de l'élément intercalaire cathodique 22 et une quatrième gorge périphérique 60b agencée autour de l'orifice 40 correspondant à l'orifice d'évacuation du produit (ici l'hydrogène) du côté dudit élément intercalaire cathodique 22. Les troisième et quatrième gorges périphériques 58b et 60b sont agencées pour recevoir des moyens d'étanchéité 62b, 64b respectivement, tels qu'un joint torique. Ainsi, l'étanchéité est assurée pour chaque réactant et pour chaque produit, et une barrière est constituée pour empêcher le mélange des produits. En cas de fuite, les produits ne peuvent pas se mélanger, mais s'échappent vers l'extérieur.

Enfin, le cadre 23 comprend sur sa face supérieure 23a, une encoche 72 formée dans le bord de la patte 24a, ladite encoche 72 étant agencée pour recevoir des moyens de mesure de la tension de la cellule, tels qu'une fiche (non représentée). Une telle fiche est insérée dans l'encoche 72 de chaque cellule 10 de l'empilement et s'appuie contre la plaque bipolaire adjacente. La fiche dispose d'un effet ressort pour assurer un bon contact électrique. Chaque cellule 10 est donc munie d'une prise de tension, ainsi que la plaque terminale anodique 4. L'ensemble des mesures de tension permet de surveiller avec précision les performances de l'empilement, et de détecter d'éventuels problèmes ou défauts de fonctionnement.

Le cadre peut être réalisé par exemple en matières plastiques, telles que polysulphone, PEEK, etc., en utilisant des procédés de fabrication simples, tels que par injection ou tout autre procédé de moulage permettant une production en masse.

Avantageusement, chaque plaque bipolaire 18a, 18b est une plaque métallique lisse et comportant des orifices 66 pour le passage des réactants, des orifices 68 pour le passage des produits et des orifices 70 pour le passage d'une tige axiale 6, en correspondance avec ceux du cadre 23. Les dimensions (ici le diamètre) des plaques bipolaires 18a, 18b peuvent correspondre à celles du cadre 23 de sorte que les plaques bipolaires 18a, 18b se superposent exactement au cadre 23, comme dans la variante représentée ici. Dans un autre mode de réalisation, les plaques bipolaires peuvent présenter des dimensions (ici un diamètre) supérieures a celles du cadre de manière à laisser libre la périphérie des plaques bipolaires, constituant une zone favorisant le refroidissement du dispositif.

Le dispositif électrochimique 1 selon l'invention est formé en empilant, entre les tiges axiales 6, une plaque bipolaire 18a, un cadre 10 contenant les éléments intercalaires anodique 21 et cathodique 22 disposés de part et d'autre de l'ensemble membrane/électrodes 20, une autre plaque bipolaire 18b, un autre cadre 10 contenant les éléments intercalaires anodique 21 et cathodique 22 et l'ensemble membrane/électrodes, etc. ..., les cadres 10 étant toujours positionnés selon la même orientation. Les orifices 38, 42 d'amenée relatifs à un même réactant et les orifices 40, 44 d'évacuation relatifs à un même produit des différentes cellules 10 se superposent pour former des canaux d'amenée des réactants et des canaux d'évacuation des produits. Ces canaux sont reliés aux raccords/tubes 12, 13 pour l'amenée des réactants et aux raccords/tubes 14, 15 pour l'évacuation des produits. L'ensemble est ensuite mis sous contrainte en serrant les plaques d'extrémité 2 et 4 au moyen des écrous vissés sur les tiges axiales 6. Les rondelles Belleville 8, pré-contraintes par le serrage des écrous, fournissent une fonction « ressort » qui permet de garder l'empilement sous une contrainte essentiellement constante malgré les changements de dimensions dus aux dilatations thermiques.

Grâce à ces différents aspects de l'invention, on dispose d'un dispositif électrochimique dont la construction est simplifiée. En effet, le nombre de pièces mises en oeuvre est réduit et les différentes pièces peuvent être réalisées simplement, pour des productions en masse, et assemblées de manière semi-automatique ou .automatique. Les joints toriques sont des joints standard, disponibles sur le marché. Les plaques bipolaires sont des plaques lisses, sans canal de guidage à former. L'utilisation, pour les éléments intercalaires, d'une structure en treillis permettant le passage des réactants et des produits dans toutes les directions supprime la contrainte d'orienter/usiner les pièces pour réaliser les canaux de guidage. L'assemblage des différents éléments se fait par simple empilement, sans collage ou autre procédé d'assemblage complexe, et sans nécessiter une extrême précision. Notamment, l'utilisation d'un assemblage membranes/électrodes intégré dans le cadre, avec les éléments intercalaires relativement souples, et de joints toriques positionnés dans les gorges prévues sur le cadre permet d'absorber des éventuelles variations de dimensions des pièces. Par ailleurs, la membrane, positionnée entièrement dans l'ouverture centrale du cadre, est protégée, la pression s'appliquant essentiellement entre les différents cadres et les plaques bipolaires et non sur la membrane en elle-même.

De plus, le positionnement de l'assemblage membrane/électrodes et des plaques bipolaires permet de prévoir des chemins ouverts constitués par les creusures pour l'amenée des réactants ou l'évacuation des produits, alors que les dispositifs de l'art antérieur utilisent des passages creusés dans l'épaisseur du châssis.

Le dispositif électrochimique selon l'invention permet également une répétabilité de la distance entre chaque cellule. Le contact entre chaque cadre et chaque plaque bipolaire étant plan et mettant en oeuvre des surfaces dures, les joints toriques étant écrasés dans leur gorge respective, la distance entre les cellules est uniquement déterminée par l'épaisseur du cadre muni de ses plaques bipolaires.

Le dispositif électrochimique selon l'invention peut fonctionner sous une pression équilibrée de part et d'autre de la membrane, c'est-à-dire par exemple pour produire de l'hydrogène et de l'oxygène à une pression similaire. Par exemple, la pression peut être comprise entre 0 et 100 bars. Il peut également fonctionner sous pression non-équilibrée.

Bien entendu, la présente invention ne se limite pas à l'exemple illustré et est susceptible de diverses variantes et modifications qui apparaîtront de manière évidente à l'homme du métier, l'invention étant définie par les revendications.

## Revendications

1. Dispositif électrochimique (1) destiné à la production de produits par réaction électrochimique de réactants, ledit dispositif électrochimique (1) comprenant un empilement de cellules électrochimiques (10), chaque cellule (10) comprenant un châssis (16), deux plaques bipolaires (18a, 18b) partagées avec dés cellules (10) adjacentes, un assemblage membrane/électrodes (20) et deux éléments intercalaires (21, 22) jouant le rôle à la fois de collecteurs/distributeurs de courant pour assurer le transport de courant et de plaques d'écoulement pour assurer le transport de réactants/produits, ledit châssis (16) de la cellule (10) comprenant un seul cadre (23) réalisé d'une seule pièce, et ledit cadre (23) présentant des faces supérieure (23a) et inférieure (23b) agencées respectivement pour réaliser un contact plan avec les plaques bipolaires (18a, 18b) disposées de part et d'autre dudit cadre (23), et une ouverture centrale (26) agencée pour recevoir l'assemblage membrane/électrodes (20) et les éléments intercalaires (21,22), ledit cadre (23) comprenant tous les orifices (38, 40, 42, 44) nécessaires à l'amenée des réactants et à l'évacuation des produits, et l'ouverture (26) du cadre (12) présentant un épaulement périphérique intérieur (28) **caractérisé en ce que** ledit épaulement périphérique intérieur (28) comprend une première gorge périphérique (34) agencée pour recevoir des moyens d'étanchéité (36), et **en ce qu'**une zone périphérique (20a) de l'assemblage membrane/électrodes (20) repose sur ledit épaulement de manière à définir un premier espace (30) dans lequel se loge un élément intercalaire (22) et un deuxième espace (32) dans lequel se loge l'autre élément intercalaire (21), lesdits premier et deuxième espaces (30, 32) étant fermés respectivement par l'une des plaques bipolaires (18a, 18b), et
**en ce que** les faces supérieure (23a) et inférieure (23b) du cadre (23) comprennent respectivement, autour de l'ouverture (26), une deuxième gorge périphérique (54a, 54b) agencée pour recevoir des moyens d'étanchéité (56a, 56b), et positionnée de sorte que les orifices (38, 40, 42, 44) d'amenée et d'évacuation relatifs aux réactants et aux produits présents d'un même côté de l'assemblage membrane/électrodes (20) sont disposés à l'intérieur de la deuxième gorge périphérique (54a, 54b) et les orifices correspondant aux orifices (38, 40, 42, 44) d'amenée et d'évacuation relatifs aux réactants et aux produits présents de l'autre côté de l'assemblage membrane/électrodes (20) sont disposés à l'extérieur de ladite deuxième gorge périphérique (54a, 54b), ainsi qu'une troisième (58a, 58b) et une quatrième (60a, 60b) gorges périphériques agencées autour des orifices (38, 40, 42, 44) correspondant aux orifices d'amenée et d'évacuation relatifs aux réactants et aux produits présents de l'autre côté de l'assemblage membrane/électrodes (20), lesdites troisième (58a, 58b) et quatrième (60a, 60b) gorges étant agencées pour recevoir des moyens d'étanchéité (62a, 62b, 64a, 64b).

2. Dispositif électrochimique (1) selon la revendication 1, **caractérisé en ce que** la hauteur de l'assemblage membrane/électrodes (20) et des éléments intercalaires (21, 22) est choisie pour être légèrement supérieure à l'épaisseur du cadre (23) avant montage.

3. Dispositif électrochimique (1) selon la revendication 1 ou 2, **caractérisé en ce que** les faces supérieure (23a) et inférieure (23b) du cadre (23) comprennent respectivement une première creusure (48a, 48b) agencée pour mettre en communication fluidique l'orifice d'amenée (38, 42) du réactant avec l'élément intercalaire associé (21, 22) et une deuxième creusure (50a, 50b) agencée pour mettre en communication fluidique ledit élément intercalaire (21, 22) avec l'orifice d'évacuation (40, 44) du produit.

4. Dispositif électrochimique (1) selon l'une des revendications 1, 2 ou 3, **caractérisé en ce que** les orifices (38, 40, 42, 44) d'amenée des réactants et d'évacuation des produits sont disposés perpendiculairement aux faces supérieure (23a) et inférieure (23b) du cadre (23).

5. Dispositif électrochimique selon l'une des revendications précédentes, **caractérisé en ce que** les moyens d'étanchéité (36, 56a, 56b ; 62a, 62b, 64a, 64b) sont des joints toriques.

6. Dispositif électrochimique selon l'une des revendications précédentes, **caractérisé en ce que** chaque plaque bipolaire (18a, 18b) est une plaque métallique lisse comportant des orifices (66) d'amenée des réactants et des orifices (38) d'évacuation des produits en correspondance avec ceux du cadre (23).

7. Dispositif électrochimique selon l'une des revendications précédentes, caractérisé en ce le dispositif est un électrolyseur.

## Patentansprüche

1. Elektrochemische Vorrichtung (1), die für die Herstellung von Produkten durch eine elektrochemische Reaktion der Reaktanten bestimmt ist, wobei die elektrochemische Vorrichtung (1) einen Stapel von elektrochemischen Zellen (10) umfasst, wobei jede Zelle (10) einen Rahmen (16), zwei Bipolarplatten (18a, 18b), die zwischen benachbarten Zellen (10) geteilt sind, eine Anordnung Membran / Elektroden (20) und zwei Zwischenelemente (21, 22), die zu einem Zeitpunkt die Rolle als Sammler / Verteiler von Strom spielen, um den Transport von Strom zu gewährleisten, und Kreuzstrom-Platten, um den Transport von Reaktanten / Produkten sicherzustellen, umfasst, wobei der Rahmen (16) der Zelle (10) einen einzelnen Rahmen (23) umfasst, der einstückig ausgebildet ist, und wobei der Rahmen (23) eine obere (23a) bzw. eine untere (23b) Seite, die jeweils angeordnet sind, um einen flachen Kontakt mit den Bipolarplatten (18a, 18b) zu realisieren, die auf beiden Seiten des Rahmens (23) angeordnet sind, und eine zentrale Öffnung (26) umfasst, die angeordnet ist, um die Anordnung Membran / Elektroden (20) und die Zwischenelemente (21,22) aufzunehmen, wobei der Rahmen (23) alle Öffnungen (38, 40, 42, 44) umfasst, die für den Einlass von Reaktanten und den Auslass der Produkte notwendig sind, und wobei die Öffnung (26) des Rahmens (12) eine innere Umfangsschulter (28) aufweist, **dadurch gekennzeichnet, dass** die innere Umfangsschulter (28) eine erste Umfangsnut (34) umfasst, die angeordnet ist, um Dichtungsmittel (36) aufzunehmen, und dass eine Umfangszone (20a) der Anordnung Membran / Elektroden (20) so auf der Schulter ruht, um einen ersten Raum (30), in dem ein Zwischenelement (22) untergebracht ist, und einen zweiten Raum (32) zu definieren, in dem das andere Zwischenelement (21) untergebracht ist, wobei der erste und der zweite Raum (30, 32) jeweils durch eine der Bipolarplatten (18a, 18b) geschlossen ist, und dass die obere (23a) und die untere (23b) Seite des Rahmens (23) jeweils rund um die Öffnung (26) eine zweite Umfangsnut (54a, 54b) umfassen, die angeordnet ist, um Dichtungsmittel (56a, 56b) aufzunehmen, und so positioniert ist, dass die Öffnungen (38 , 40, 42, 44) zum Einlass und Auslass bezogen auf die Reaktanten und die Produkte, die auf der gleichen Seite der Anordnung Membran / Elektroden (20) vorhanden sind, innerhalb der zweiten Umfangsnut (54a, 54b) angeordnet sind, und dass die Öffnungen den Öffnungen (38, 40, 42, 44) zum Einlass und Auslass bezogen auf die Reaktanten und die Produkte, die auf der gleichen Seite der Anordnung Membran / Elektroden (20) vorhanden sind, im Inneren der zweiten Umfangsnut (54a, 54b) angeordnet sind, und die Öffnungen, die den Öffnungen (38, 40, 42, 44) zum Einlass und Auslass bezogen auf die Reaktanten und die Produkte, die auf der anderen Seite der Anordnung Membran / Elektroden (20) vorhanden sind, im Äußeren der zweiten Umfangsnut (54a, 54b) angeordnet sind, sowie dass eine dritte (58a, 58b) und eine vierte (60a, 60b) Umfangsnut vorgesehen sind, die um die Öffnungen (38, 40, 42, 44) angeordnet sind, die den Öffnungen zum Einlass und Auslass bezogen auf die Reaktanten und die Produkte entsprechen, die auf der anderen Seite der Anordnung Membran / Elektroden (20) vorhanden sind, wobei die dritte (58a, 58b) und vierte (60a, 60b) Nut angeordnet sind, um Dichtungsmittel (62a, 62b, 64a, 64b) aufzunehmen.

2. Elektrochemische Vorrichtung (1) nach Anspruch 1, **dadurch gekennzeichnet, dass** die Höhe der Anordnung Membran / Elektroden (20) und der Zwischenelemente (21, 22) so gewählt ist, dass sie geringfügig größer als die Dicke des Rahmens (23) vor der Montage ist.

3. Elektrochemische Vorrichtung (1) nach Anspruch 1 oder 2, **dadurch gekennzeichnet, dass** die obere (23a) und untere (23b) Seite des Rahmens (23) jeweils eine erste Aussparung (48a, 48b), die eingerichtet ist, die Zufuhröffnung (38, 42) des Reaktanten mit dem zugeordneten Zwischenelement (21, 22) in Fluidverbindung zu bringen, und eine zweite Aussparung (50a, 50b) umfassen, die eingerichtet ist, das Zwischenelement (21, 22) mit der Öffnung zum Auslass (40, 44) des Produkts in Fluidverbindung zu bringen.

4. Elektrochemische Vorrichtung (1) nach einem der Ansprüche 1, 2 oder 3, **dadurch gekennzeichnet, dass** die Öffnungen (38, 40, 42, 44) zum Einlass von Reaktanten und Auslass der Produkte senkrecht zu der oberen (23a) und unteren (23b) Fläche des Rahmens (23) angeordnet sind.

5. Elektrochemische Vorrichtung nach einem der vorhergehenden Ansprüche, **dadurch gekennzeichnet, dass** die Dichtungsmittel (36, 56a, 56b; 62a, 62b, 64a, 64b) O-Ringe sind.

6. Elektrochemische Vorrichtung nach einem der vorhergehenden Ansprüche, **dadurch gekennzeichnet, dass** jede bipolare Platte (18a, 18b) eine glatte Metallplatte ist, die Löcher (66) zum Einlass der Reaktanten und Öffnungen (38) zum Auslass von Produkten in Übereinstimmung mit denjenigen des Rahmens (23) umfasst.

7. Elektrochemische Vorrichtung nach einem der vorhergehenden Ansprüche, **dadurch gekennzeichnet, dass** die Vorrichtung ein Elektrolyseur ist.

## Claims

1. Electrochemical device (1) intended for the production of products through electrochemical reaction of reactants, said electrochemical device (1) comprising a stack of electrochemical cells (10), each cell (10) comprising a structure (16), two bipolar plates (18a, 18b) shared with adjacent cells (10), a membrane/electrode assembly (20) and two intermediate elements (21, 22) serving both as current collectors/distributors for guiding current and as cross-flow plates for guiding reactants/products, said structure (16) of the cell (10) comprising a single frame (23) made in one-piece, said frame (23) having upper (23a) and lower (23b) faces respectively arranged to form a plane contact with the bipolar plates (18a, 18b) arranged on either side of said frame (23), and a central opening (26) arranged to receive the membrane/electrode assembly (20) and the intermediate elements (21, 22), said frame (23) comprising all the orifices (38, 40, 42, 44) necessary for feeding reactants and evacuating products, and the opening (26) of the frame (23) comprising an inner peripheral shoulder (28), **characterised in that** said inner peripheral shoulder (28) comprises a first peripheral groove (34) arranged to receive sealing means (36), **in that** a peripheral area (20a) of the membrane/electrode assembly (20) rests on said shoulder in such a way as to define a first space (30) which houses an intermediate element (22) and a second space (32) which houses the other intermediate element (21), said first and second spaces (30, 32) being respectively closed by one of the bipolar plates (18a, 18b), and **in that** the upper (23a) and lower (23b) faces of the frame (23) respectively comprise, around the opening (26), a second peripheral groove (54a, 54b) arranged to receive sealing means (56a, 56b), and positioned so that the inlet and outlet ports (38, 40, 42, 44) pertaining to the reactants and products present on the same side of the membrane/electrode assembly (20) are arranged inside the second peripheral groove (54a, 54b) and the orifices corresponding to the inlet and outlet ports (38, 40, 42, 44) pertaining to the reactants and products present on the other side of the membrane/electrode assembly (20) are arranged outside said second peripheral groove (54a, 54b), and a third (58a, 58b) and a fourth (60a, 60b) peripheral grooves arranged around orifices (38, 40, 42, 44) corresponding to the inlet and outlet ports pertaining to the reactants and products present on the other side of the membrane/electrode assembly (20), said third (58a, 58b) and fourth (60a, 60b) grooves being arranged to receive sealing means (62a, 62b, 64a, 64b).

2. Electrochemical device (1) according to claim 1, **characterized in that** the height of the membrane/electrode assembly (20) and of the intermediate elements (21, 22) is selected to be slightly greater than the thickness of the frame (23) prior to assembly.

3. Electrochemical device (1) according to claim 1 or 2, **characterized in that** the upper (23a) and lower (23b) faces of the frame (23) respectively comprise a first hollow (48a, 48b) arranged to place the reactant feed orifice (38, 42) in fluid communication with the associated intermediate element (21, 22), and a second hollow (50a, 50b) arranged to place said intermediate element (21, 22) in fluid communication with the product evacuation orifice (40, 44).

4. Electrochemical device (1) according to any one of claims 1, 2 and 3, **characterized in that** the orifices (38, 40, 42, 44) for feeding the reactants and evacuating the products are arranged perpendicularly to the upper face (23a) and lower face (23b) of the frame (23).

5. Electrochemical device according to any of the preceding claims, **characterized in that** the sealing means (36, 56a, 56b; 62a, 62b, 64a, 64b) are O-ring seals.

6. Electrochemical device according to any of the preceding claims, **characterized in that** each bipolar plate (18a, 18b) is a smooth metallic plate comprising reactant feed orifices (66) and product evacuation orifices (38) matching those of the frame (23).

7. Electrochemical device according to any of the preceding claims, **characterized in that** the device is an electrolyser.
